# EUROPEAN PATENT APPLICATION

(11) **EP 1 254 602 A2**
(43) Date of publication of application: **06.11.2002**
(21) Application number: 01128362.9
(22) Date of filing: 30.11.2001
(51) Int. Cl.: A23G 9/24, A23G 9/26, A23G 9/08

(54) **Apparatus and method for producing ice-creams or similar products with stick, covered with chocolate or similar product**

(30) Priority: 05.04.2001 IT MI010739
(71) Applicant: SIDAM S.R.L., 20032 Cormano (MI) (IT)
(72) Inventor: Grigoli, Franco Albino Luigi, 20125 Milano (IT)
(74) Representative: La Ciura, Salvatore

(57) **Abstract**

The invention relates to an apparatus and the relavant method for producing ice-creams with stick, covered, providing for:
- filling the moulds, become cold by means of previous production cycles, with the covering product, for example chocolate;
- suction of chocolate from the moulds so that only the desired layer of frozen product adheres to said moulds;
- filling of the mould with ice-cream or other edible product;
- insertion of the stick before the starting of the freezing of the top or during or soon afterwards for obtaining the best results;
- gas freezing of the product top for obtaining a closing "plug" of the tub;
- starting of brine freezing that will end after the dosage of the closing plug;
- optionally measure such a chocolate layer or other edible product as to obtain a total covering.

Said method according to the invention allows to obtain ice-creams or similar covered products, by accurately giving to the covering layer the desired shape and above all by using a brine (or similar liquids) linear or rotary tank type system, quick and inexpensive.

## Description

This invention relates to an apparatus and the respective method for producing covered ice-creams, with stick, providing for:
- filling the moulds, become cold by means of preceding production cycles, with the covering product, for example chocolate;
- suction of chocolate from the moulds so that only the desired layer of frozen product adheres to said moulds;
- filling of the mould with ice-cream or other edible product;
- insertion of the stick before the starting of the freezing of the top or during or soon afterwards for obtaining the best results;
- gas freezing of the product top for obtaining a closing "plug" of the tub;
- starting of brine freezing that will end after the dosage of the closing plug;
- optionally measure such a chocolate layer or other edible product as to obtain a total covering.

Said method according to the invention allows to obtain ice-creams or similar covered products, by accurately giving to the covering layer, the desired shape and above all by using a brine (or similar liquids) linear or rotary tank type system, quick and inexpensive.

In addition, it is also possible to make use of existing apparatuses, without the need to produce ad *hoc* equipment, but by completing the apparatus with components already in use in the same sector.

At present, the apparatuses for producing ice-creams with stick can be divided into two categories, according to the type of cooling method being used.

In the first type of apparatuses, providing for tunnel cooling with cooling air or gas circulation, the product is cooled until it reaches such a consistency as to allow the extrusion; it is therefore sent to an extruder, which shapes the product; said product is then cut in the intended thickness; during the extrusion the stick is inserted.

The product, with the stick in, is then put down on trays travelling through the cooling tunnel wherein gas or air circulate at a proper low temperature (usually in air around -40°C).

At the exit, the product is taken by the stick and briefly dunked in a melted chocolate tank in order to obtain the intended covering layer.

Such apparatus offers the advantage of an easy displacement of the products from the trays, since, because of the different coefficients of expansion between product and supporting tray, at the end of the freezing stage, it is sufficient to give to the tray a little mechanical vibration to cause the detachment of the product.

On the other hand, this method does not allow to control the final shape of the product since the ice-cream, upon the extrusion can expand and change its original shape accordingly, which is also slightly deformed during the fall of the product on the tray.

In addition, the melted chocolate produces a covering layer with variable thickness according to the cooling temperature and time when it comes into contact with the cold product that, since it is in an upright position, makes the flowing of the chocolate towards the opposite side of the stick easier.

The second category of apparatuses provides for the use of a series of moulds intended to hold the product and that are cooled by making them pass through a brine bath or other liquid with similar characteristics.

The production cycle provides for the dosage of the product into moulds, the brine freezing, different operations intended for the specific product, the utilisation of hot fluid in order to allow the unfreezing and, finally, the extraction of the product, which therefore passes to the covering phase still by immersion in the melted chocolate.

Also this method does not allow getting a precise shape covering, and in any case there is a certain waste of energy, both due to the heating of the surface of the moulds and their subsequent washing in the case of linear apparatuses.

Both the conventional technologies, therefore, do not allow producing covered ice-creams with precisely-shaped surface and the known methods turn out to be ineffective in the case of brine cooling apparatuses.

In fact, it was found out that that the change in the chocolate volume during the freezing, different from the mould temperature, creates an air casing between said mould and the walls, which air casing acting as insulator and considerably slowing down the subsequent freezing phase so that, after several minutes of presence in brine, the product is not yet completely unfrozen (the usual times of unfreezing usually range around six minutes).

The solution of this problem is now offered by this invention, which relates to a method and the respective apparatus for producing ice-creams with stick, covered, which provides for the measurement of the covering product in the mould at a certain temperature, sucking up it in such a way as to get a desired thickness layer that adheres to the mould; the subsequent measurement of the ice-cream with pasty consistency (at around -3, -4°C); the starting of the cooling in gas of the top of the mould to start the formation of a closing plug; the insertion, before or during or after the top freezing of the stick; the starting of the brine freezing; the optional measurement of the chocolate plug in an ideal phase during the brine freezing and then the end of the freezing of the product in brine.

It was found out that by this method the natural expansion of the product upward is prevented, thanks to the presence of the closing "plug". Said expansion expands therefore towards the side surfaces that remain in contact with said mould and do not prevent the heat exchange required to get in a short time the freezing of the product.

The covering layer into contact with the mould does not adhere, and therefore allows an easy mechanical extraction of the product without the need to direct to the outer surface of the mould a hot fluid, thus allowing also a considerable energy saving and simplifying the production cycle.

The product, under said conditions, comes out of the mould with the very same dimensions and volumes as those planned without any variation.

In addition, the outer surface of the covering product remains perfectly smooth and with the exact definition as the shape of the mould.

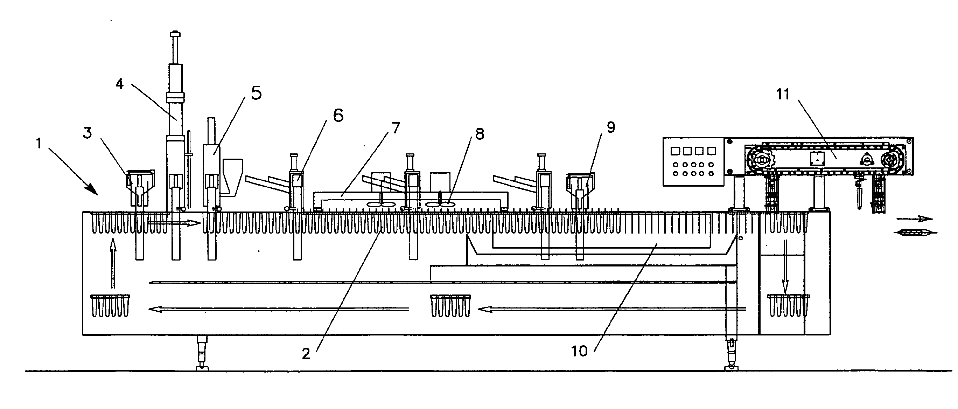

This invention will be now described in full details, by way of example but without any limitation thereto, with reference to the single figure hereto annexed which shows, schematically, the elevation view, of an apparatus according to the invention.

With reference to the above mentioned figure, the apparatus includes a run, for example ring-shaped, indicate as a whole with 1, along which a plurality of rows of moulds 2 move for the production of ice-creams. The apparatus includes:
- a chocolate dosage equipment 3;
- below said equipment, a suction device 4 which drains the mould of the chocolate not yet frozen;
- a measuring device 5 which fills the mould with the product;
- a stick device 6, which insert the sticks into the single moulds filled with product;
- a first air cooling station 7, wherein cooling gas circulates, for example nitrogen moved by known type fans 8;
- a second equipment 9, optional, which measures a chocolate, or other product, covering layer, in such a way as to create a sort of "plug", on the product contained in the mould;
- a freezing tank 10 wherein the mould move immersed in a brine bath and, finally
- a product extraction station 11.

The operation is described as follows.

The moulds reach the station 3, cooled by means of the previous process.

The measuring devices then fill the moulds with melted chocolate that, in contact with the cold walls of the mould, freezes in surface, thus creating a thickness that can be controlled according to the subsequent processes.

Soon afterwards, (only a few seconds after the filling, according to the desired thickness) the suction device 4 sucks down the melted chocolate by the moulds, so that inside the latter only the layer that creates the shell and the mass of which is insufficient to cause an excessive heating of the moulds remains.

Below the suction devices 4, the measuring device 5 fills then the moulds with the chocolate shell of product at a temperature of around -3/-4°C, and the sticks are thus inserted by means of the stick device 6.

The stick device might be also placed further down, for example near the air cooling station 7 or also below the latter, as shown by the figure.

The moulds then pass into the cooling station 7 wherein a cooling gas, for example nitrogen moved by the fans 8, causes the freezing of the upper crust of product, which solidifies. Said crust prevents the product from expanding upwards. A second measuring device 9, optional, measures into the moulds containing the product, a thin layer of a product that can be still chocolate, which creates a sort of closing wall.

Afterwards the moulds pass by the freezing tank 10, wherein the product, by giving off heat to the brine, reaches the final intended temperature.

At the exit of the freezing tank, the product is picked up by the equipment 11, by means of a simple mechanical intervention and without the need of traditional unfreezing systems, and sent to the packaging.

The moulds, keeping on their running, start again the cycle. From the foregoing it will be clear that through the method and equipment described it is possible to obtain ice-creams in which the product surface can be shaped with accuracy, making use of apparatuses with freezing tank, among which also existing apparatuses, completed with the addition of a few apparatuses, on the other hand already in use in the sector.

There is also the additional advantage to eliminate, in the new apparatuses with brine cooling tank, all the heating devices of the known moulds and to restrict the use of the washing apparatuses of the moulds to the cleaning operations at the end of the production cycle. In substance, the apparatus according to the invention, allows to offer all the solidity and inexpensiveness advantages of the tunnel systems and those of quickness and inexpensiveness of management of the brine systems, by eliminating the present systems of product covering with chocolate or other edible product, which is usually obtained after the unfreezing required for the extraction of the product.

A skilled in the art may make changes and different versions, which shall be considered as included within the competence of this invention.

## Claims

1. Method for producing ice-creams with stick, covered, **characterised by** the fact of providing the following phases:
• cooling the moulds up to a temperature sufficient to cause the surface freezing of a covering product of the ice-cream;
• filling the moulds with said covering product for the formation of a desired layer of solidified product into contact with the mould wall;
• suction of the not yet solidified product;
• filling the mould with the cooled product until it reaches a pasty consistency;
• insertion of the stick;
• a freezing phase of said upper layer of the product before the transition of the moulds in the brine;
• subsequent starting of freezing in the brine tank.

2. Method according to the claim 1, **characterised by** the fact of providing:
• a further phase of dosage of an optional covering layer into the mould already filled with the product;
• subsequent completion of freezing in brine tank.

3. Method according to the claim 1 or 2, **characterised by** the fact that said cooling phase of the upper layer of product is carried out in a tunnel by a cooling gas.

4. Apparatus for the production of ice-creams with stick, covered, **characterised by** the fact of providing:
• devices suited to cool the moulds;
• devices suited to fill the mould with the product intended to realise the covering;
• devices suited to suck this covering product just below the filling station in such a way as to let only the desired layer of cooled product adhere to the mould wall;
• measuring devices suited to fill the mould of product;
• devices suited to insert the stick;
• devices suited to cause the freezing of the upper layer of product before the transition of the moulds in the freezing tank.
• a final freezing tank of the product.
• devices suited to pull the finished product out of the moulds.

5. Apparatus for the production of ice-creams with stick according to claim 5, **characterised by** the fact of providing devices suited to measure out into the mould filled with product a thin layer of covering material.
